(19) Europäisches Patentamt / European Patent Office / Office européen des brevets

(11) **EP 3 644 272 A1**

(12) **EUROPEAN PATENT APPLICATION**
published in accordance with Art. 153(4) EPC

(43) Date of publication:
**29.04.2020 Bulletin 2020/18**

(51) Int Cl.:
***G06T 5/00*** *(2006.01)*

(21) Application number: **18900555.6**

(86) International application number:
**PCT/CN2018/106642**

(22) Date of filing: **20.09.2018**

(87) International publication number:
**WO 2020/037754 (27.02.2020 Gazette 2020/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.08.2018 CN 201810967579**

(71) Applicant: **Wangsu Science & Technology Co., Ltd.**
**Xuhui District Shanghai 200030 (CN)**

(72) Inventors:
• **HUANG, Xuehui**
**Shanghai 200030 (CN)**
• **LV, Shibiao**
**Shanghai 200030 (CN)**

(74) Representative: **Hanna Moore + Curley**
**Garryard House**
**25/26 Earlsfort Terrace**
**Dublin 2, D02 PX51 (IE)**

(54) **METHOD AND DEVICE FOR ENHANCING IMAGE QUALITY OF VIDEO**

(57) A method for enhancing video image quality includes: determining a target region of a target pixel in a target video frame; generating statistical information of all pixels in the target region based on target pixel values of all the pixels in the target region; and calculating and generating an enhanced pixel value of the target pixel based on the statistical information and preset configuration parameters in combination with a target pixel value of the target pixel.

FIG. 1

EP 3 644 272 A1

**Description**

FIELD OF DISCLOSURE

The present disclosure generally relates to the field of multimedia technologies, and more particularly, relates to a method and device for enhancing video image quality.

BACKGROUND

With the development of the Internet and multimedia technologies, watching online videos has currently become a mainstream form of entertainment. When watching online videos, users tend to watch videos with higher video image quality. However, in the process of transmitting a network video, in order to adapt to different terminals and bandwidths, the network video is transcoded multiple times and the video bit rate is reduced, resulting in lower video image quality when a terminal plays the received network video.

In order to enhance the video image quality, when playing a network video, some terminals may enhance the video image quality of a received network video based on the built-in video image quality enhancement function. First, a terminal may decode the received network video into a series of video frames based on the video decoding function. Afterwards, the terminal may perform video image quality enhancement on each video frame, in units of video frames, according to a preset enhancement rule, for example, by uniformly adjusting parameters such as brightness and contrast of each video frame to enhance the video image quality of each video frame. Finally, the terminal may sequentially output and play the enhanced video frames according to the playing order of the video frames.

In the process of implementing the present disclosure, the applicants have found that the existing technologies have at least the following problems:

When the video image quality enhancement is performed on a video frame according to the above preset enhancement rule, the video image quality enhancement may not be performed based on the actual defects of the video frame. For example, users always want some wrinkles, spots, or other defects on the face or skin areas appearing in the video to be enhanced for the video image quality. Accordingly, the effect of video image quality enhancement is poor.

BRIEF SUMMARY OF THE DISCLOSURE

To solve the problems in the existing technologies, the embodiments of the present disclosure provide a method and device for enhancing video image quality. The technical solutions are as follows:
In one aspect, a method for enhancing video image quality is provided. The method includes:

determining a target region of a target pixel in a target video frame;
generating statistical information of all pixels in the target region based on target pixel values of all the pixels in the target region; and
calculating and generating an enhanced pixel value of the target pixel based on the statistical information and preset configuration parameters in combination with a target pixel value of the target pixel.

Further, determining the target region of the target pixel in the target video frame includes:
determining, based on a preset radius, a rectangular region, in which the target pixel is the center of the rectangular region, the length is twice the preset radius plus one, and the width is twice the preset radius plus one, as the target region.

Further, the statistical information includes at least a mean, a deviation, and a variance, and the preset configuration parameters include at least a denoising offset parameter and an enhancement parameter; and
calculating and generating the enhanced pixel value of the target pixel according to the statistical information and the preset configuration parameters in combination with the target pixel value of the target pixel includes:

substituting the variance of the target pixel values of all the pixels in the target region into a preset function expression corresponding to a pixel distribution complexity to calculate a pixel distribution complexity of the target region, and substituting the mean and the deviation of the target pixel values of all the pixels in the target region, the pixel distribution complexity, the denoising offset parameter, the enhancement parameter, and the target pixel value of the target pixel into a free enhancement function expression corresponding to the enhanced pixel value, to calculate and generate the enhanced pixel value of the target pixel.

Further, the statistical information includes at least a deviation and a variance, and the preset configuration parameters include at least an absolute deviation parameter, an enhancement parameter, and a denoising offset parameter; and

calculating and generating the enhanced pixel value of the target pixel according to the statistical information and the preset configuration parameters in combination with the target pixel value of the target pixel includes:

substituting the variance of the target pixel values of all the pixels in the target region into a preset function expression corresponding to a pixel distribution complexity to calculate a pixel distribution complexity of the target region, and substituting the deviation of the target pixel values of all the pixels in the target region, the pixel distribution complexity of the target region, the absolute deviation parameter, the denoising offset parameter, the enhancement parameter, and the target pixel value of the target pixel into a limited enhancement function expression corresponding to the enhanced pixel value, to calculate and generate the enhanced pixel value of the target pixel.

Further, determining the target region of the target pixel in the target video frame includes:

splitting the target video frame into a preset number of video strips based on a total number of rows of pixels or a total number of columns of pixels of the target video frame; and
determining a target region of a target pixel in each video strip.

Further, the method also includes:

if the enhanced pixel value of the target pixel is greater than a maximum pixel value in a value range corresponding to a data type of the target pixel, updating the enhanced pixel value to an updated pixel value obtained by subtracting a preset value from the pixel maximum value; or
if the enhanced pixel value of the target pixel is smaller than a minimum pixel value in the value range corresponding to the data type of the target pixel, updating the enhanced pixel value to an updated pixel value obtained by adding the preset value to the minimum pixel value.

Further, before determining the target region of the target pixel in the target video frame, the method also includes:

if an initial color space of the target video frame does not include a luma component, converting the target pixel value of the target pixel in the initial color space into a target pixel value in a preset color space containing the luma component; and
after calculating and generating the enhanced pixel value of the target pixel, the method also includes:
converting the enhanced pixel value of the target pixel back to a pixel value in the initial color space.

In another aspect, a device for enhancing video image quality is provided. The device includes:

a determining module that is configured to determine a target region of a target pixel in a target video frame;
a statistics module that is configured to generate statistical information of all pixels in the target region based on target pixel values of all the pixels in the target region; and
an enhancement module that is configured to calculate and generate an enhanced pixel value of the target pixel based on the statistical information and preset configuration parameters in combination with a target pixel value of the target pixel.

Further, the determining module is also configured to:
determine, based on a preset radius, a rectangular region, in which the target pixel is the center of the rectangular region, the length is twice the preset radius plus one, and the width is twice the preset radius plus one, as the target region.
Further, the statistical information includes at least a mean, a deviation, and a variance, and the preset configuration parameters include at least a denoising offset parameter and an enhancement parameter; and
the enhancement module is also configured to:

substitute the variance of the target pixel values of all the pixels in the target region into a preset function expression corresponding to a pixel distribution complexity to calculate a pixel distribution complexity of the target region, and substitute the mean and the deviation of the target pixel values of all the pixels in the target region, the pixel distribution complexity, the denoising offset parameter, the enhancement parameter, and the target pixel value of the target pixel into a free enhancement function expression corresponding to the enhanced pixel value, to calculate and generate the enhanced pixel value of the target pixel.

Further, the statistical information includes at least a deviation and a variance, and the preset configuration parameters include at least an absolute deviation parameter, an enhancement degree parameter, and a denoising offset parameter; and
the enhancement module is also configured to:

substitute the variance of the target pixel values of all the pixels in the target region into a preset function expression corresponding to a pixel distribution complexity to calculate a pixel distribution complexity of the target region, and substitute the deviation of the target pixel values of all the pixels in the target region, the pixel distribution complexity of the target region, the absolute deviation parameter, the denoising offset parameter, the enhancement parameter, and the target pixel value of the target pixel into a limited enhancement function expression corresponding to the enhanced pixel value, to calculate and generate the enhanced pixel value of the target pixel.

Further, the determining module is also configured to:

split the target video frame into a preset number of video strips based on a total number of rows of pixels or a total number of columns of pixels of the target video frame; and
determine a target region of a target pixel in each video strip.

Further, the device also includes an update module that is configured to:

if the enhanced pixel value of the target pixel is greater than a maximum pixel value in a value range corresponding to a data type of the target pixel, update the enhanced pixel value to an updated pixel value obtained by subtracting a preset value from the pixel maximum value; or
if the enhanced pixel value of the target pixel is smaller than a minimum pixel value in the value range corresponding to the data type of the target pixel, update the enhanced pixel value to an updated pixel value obtained by adding the preset value to the minimum pixel value.

Further, the device also includes a conversion module that is configured to:

if an initial color space of the target video frame does not include a luma component, convert the target pixel value of the target pixel in the initial color space into a target pixel value in a preset color space containing the luma component, and
convert the enhanced pixel value of the target pixel back to a pixel value in the initial color space.

In another aspect, a terminal is provided. The terminal includes a processor and a memory. The memory stores at least one instruction, at least one program, a code set, or a set of instructions that, when loaded and executed by the processor, implements the above-described methods for enhancing video image quality.
In another aspect, a transcoding device is provided. The transcoding device includes a processor and a memory. The memory stores at least one instruction, at least one program, a code set, or a set of instructions that, when loaded and executed by the processor, implements the above-described methods for enhancing video image quality.
The beneficial effects brought by the technical solutions provided by the embodiments of the present disclosure include:
In the disclosed embodiments, a target region of a target pixel in a target video frame is determined; based on the target pixel values of all the pixels in the target region, statistical information of all the pixels in the target region is generated; based on the statistical information and preset configuration parameters in combination with the target pixel value of the target pixel, an enhanced pixel value of the target pixel is calculated and generated. In this way, based on the target pixel values of all the pixels in a region where a pixel is located in a video frame, a terminal may respectively generate an enhanced pixel value of each pixel, so that the video image quality may be enhanced based on the actual defects of the video frame. The effect of the video image quality enhancement is further improved.

BRIEF DESCRIPTION OF THE DRAWINGS

To make the technical solutions in the embodiments of the present disclosure clearer, a brief introduction of the accompanying drawings consistent with descriptions of the embodiments will be provided hereinafter. It is to be understood that the following described drawings are merely some embodiments of the present disclosure. Based on the accompanying drawings and without creative efforts, persons of ordinary skill in the art may derive other drawings.

FIG. 1 is a flowchart of a method for enhancing video image quality according to some embodiments of the present disclosure;

FIG. 2 is a schematic diagram of statistical strips and video strips of a video frame according to some embodiments of the present disclosure;

FIG. 3 is a schematic structural diagram of a device for enhancing video image quality according to some embodiments of the present disclosure;

FIG. 4 is a schematic structural diagram of a terminal according to some embodiments of the present disclosure; and

FIG. 5 is a schematic structural diagram of a transcoding device according to some embodiments of the present disclosure.

DETAILED DESCRIPTION

To make the objective, technical solutions, and advantages of the present disclosure clearer, the implementations of the present disclosure will be made in detail hereinafter with reference to the accompanying drawings.

The embodiments of the present disclosure provide a method for enhancing video image quality. The execution entity of the method may be any terminal with a video playing function, such as a smartphone or a tablet, or any transcoding device with a transcoding function, such as a transcoding server. The above terminal or transcoding device may acquire videos through a network download or copying from another terminal or transcoding device. When the execution entity is the aforementioned terminal, the terminal may call the built-in transcoding function to decode a to-be-played video into a series of video frames. The terminal may then perform video image quality enhancement on each decoded video frame, and then play the video based on each video frame with enhanced video image quality. When the execution entity is the aforementioned transcoding device, the transcoding device may decode a to-be-transcoded video into a series of video frames. The transcoding device may then perform video image quality enhancement on each decoded video frame, and re-encode each video frame with enhanced video image quality into a video in a preset format. The terminal may include a processor, a memory, and a transceiver. The processor may be configured to perform the video image quality enhancement in the following process. The memory may be configured to store data required and generated in the following process. The transceiver may be configured to transmit and receive relevant data in the following process. The disclosed embodiments are illustrated by using a terminal as the execution entity. The embodiments for using a transcoding device as the execution entity will be similar to those described for using the terminal as the execution entity, the details of which will not be repeated again.

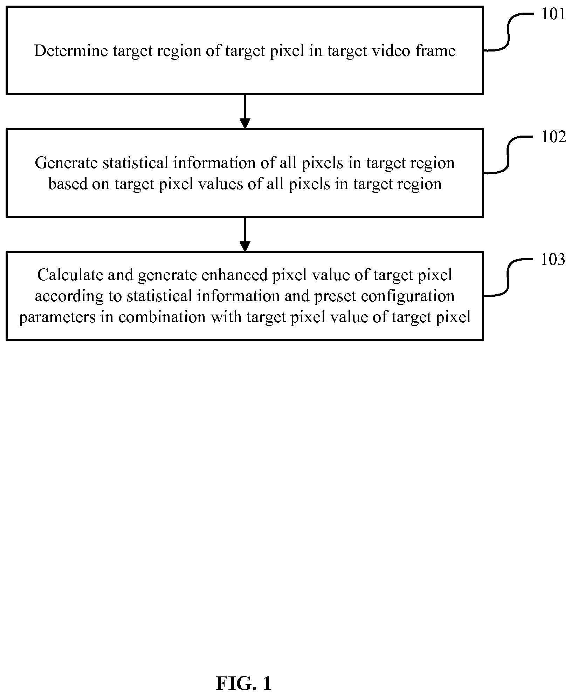

A flowchart of a method for enhancing video image quality shown in FIG. 1 will be made in detail hereinafter with reference to specific implementations. The content may be as follows:

Step 101: Determine a target region of a target pixel in a target video frame.

In one implementation, when a user wants to watch a certain network video (e.g., a target video), the user may open a corresponding video play software in a terminal to search for the target video. The terminal may display an information page for the target video. After the user clicks the video play button in the information page, the video play software may receive a video play instruction for the target video. The video play software may then acquire the target video from a server storing the target video and then play the acquired target video. On one hand, in the process of playing the target video, the video play software may call the terminal's video image quality enhancement function based on the video image quality enhancement command input by the user, and enhance the video image quality of the target video. On the other hand, before playing the target video, the video play software may also automatically call the video image quality enhancement function of the terminal, to enhance the image quality of the target video.

Specifically, after the video play software calls the video image quality enhancement function of the terminal, the terminal may acquire each video frame of the target video decoded by the video play software. The terminal may then perform video image quality enhancement on each video frame. Taking a certain video frame (which may be referred to as a "target video frame") as an example, when the terminal performs video image quality enhancement on the target video frame, the terminal may enhance, in units of pixels, each pixel in the target video frame to generate the enhanced pixel value of each pixel. When the terminal enhances a certain pixel (which may be referred to as a "target pixel") in the target video frame, the terminal first needs to determine a target region of the target pixel in the target video frame, where the target region may be a region that includes the target pixel and has a certain area. The shape of the region may be a rectangle, a circle, or other irregular shapes. Since the current pixel value of each pixel in the target region (which may be referred to as a "target pixel value") may have an effect on the enhanced pixel value of a target pixel, the target pixel value of each pixel in the target region may be used as a source of reference data for enhancing the target pixel.

Optionally, the target region of a target pixel in the target video frame may be determined based on the shape of the region and a preset radius of the target region. Correspondingly, the specific process of Step 101 may be as follows: based on a preset radius, determine a rectangular region, in which the target pixel is the center of the rectangular region, the length is twice the preset radius plus one, and the width is twice the preset radius plus one, as the target region.

In one implementation, the target region in which a target pixel is located may be a regularly shaped region such as a rectangle or a circle or may be an irregularly shaped region. A preset radius may be used to determine the size of the target region. Taking the target region as a rectangular region as an example, when the resolution of a target video frame is 1280*720, the target video frame has 720 pixel rows, and each pixel row has 1280 pixels. Assuming that the target pixel is the 100th pixel in the 100th pixel row and the preset radius is 5 pixels, then the center of the target region is the 100th pixel in the 100th pixel row, the length of the target region is 11 pixels, and the width of the target region is 11 pixels. The four vertices of the target region are the 95th pixel in the 95th pixel row, the 105th pixel in the 95th pixel row, the 95th pixel in the 105th pixel row, and the 105th pixel in the 105th pixel row. It should be noted that when the target pixel is located at an edge position of the target video frame, for example, at the first pixel row, since there are no other pixels over the target pixel, in the rectangular region determined as above, a portion of the region with no existence of pixels may be then excluded, and the remaining region is then taken as the target region.

Step 102: Generate statistical information of all pixels in the target region based on target pixel values of all the pixels in the target region.

In one implementation, after determining the target region of a target pixel in a target video frame, the terminal may acquire the target pixel value of each pixel in the target region. Afterwards, the terminal may perform a data statistical processing on the target pixel values of all pixels in the target region. For example, the terminal may determine the mean or variance of the target pixel values of all the pixels, or the deviation of a target pixel, etc., where the deviation may be the difference between the target pixel value of a target pixel and the average of the target pixel values of all the pixels in the target region. Subsequently, the terminal may generate statistical information of all the pixels in the target region. In order to improve the statistical efficiency, the calculation of the integral map I and the square integral map QI may be performed on the target video frame. The calculation results of the integral map I and the square integral map QI may be then used to generate the statistical information of all pixels in a region corresponding to each pixel in the target video frame. Since the calculation of the integral map I and the square integral map QI is relatively common in the field of image processing, it will not be described again here.

Step 103: Calculate and generate an enhanced pixel value of a target pixel according to the statistical information and the preset configuration parameters in combination with the target pixel value of the target pixel.

In one implementation, before the video image quality enhancement is performed, the terminal may pre-configure in advance the parameters related to the enhancement operation (which may be referred to as "preset configuration parameters"), such as denoising offset Off, enhancement parameter A, and other preset configuration parameters. Here, the denoising offset Off may be used to adjust the degree of de-speckling or denoising an image, and the enhancement parameter A may be used to adjust the degree of enhancement. On one hand, the terminal may call the uniform preset configuration parameters to enhance the video image quality of the videos in various video formats. On the other hand, the terminal may also predefine corresponding preset configuration parameters for videos in different video formats. When the terminal obtains the video format of a video whose video image quality is to be enhanced, the preset configuration parameters corresponding to the video format may be directly called to enhance the video image quality. Further, the terminal may also receive a parameter adjustment instruction input by a user through a graphical user interface or an application programming interface, and adjust the preset configuration parameters. For example, a user may adjust the preset configuration parameters in real time according to the screen effect of the video currently being played. In response, the terminal may receive the corresponding parameter adjustment instruction, and then apply the adjusted preset configuration parameters when processing the next video frame, to respond to the user's parameter adjustment in real time. Overall, after generating the statistical information of all the pixels in the target region, the terminal may obtain the preset configuration parameters, and then calculate and generate the enhanced pixel value of the target pixel according to the statistical information and the preset configuration parameters in combination with the target pixel value of the target pixel.

Optionally, the enhanced pixel value of the target pixel may be generated in a free enhancement mode. Correspondingly, the specific process of Step 103 may be as follows: substitute the variance of the target pixel values of all the pixels in the target region into a preset function expression corresponding to a pixel distribution complexity, to calculate the pixel distribution complexity of the target region; substitute the mean and the deviation of the target pixel values of all the pixels in the target region, the pixel distribution complexity, the denoising offset parameter, the enhancement parameter, and the target pixel value of the target pixel into a free enhancement function expression corresponding to the enhanced pixel value, to calculate and generate the enhanced pixel value of the target pixel.

In one implementation, after generating the statistical information of all the pixels in the target region, the terminal may substitute the variance $V$ in the statistical information into a preset function expression corresponding to the pixel distribution complexity $\varphi$, and calculate the pixel distribution complexity $\varphi$ of the target region. Here, the pixel distribution complexity $\varphi$ may be used to evaluate the complexity of the pixel value distribution in the target region where the target pixel is located. The higher the complexity of the pixel value distribution in the target region where the target pixel is located, the larger the pixel distribution complexity $\varphi$. To facilitate the calculation, the pixel distribution complexity $\varphi$ may be considered as a function of variance $V$, then the pixel distribution complexity $\varphi$ may be expressed as $\varphi(V)$. The aforementioned preset function expression may be considered to be a function expression of $\varphi(V)$, where the range of $<p(V)$ may be normalized to an interval [0,1]. $<p(V)$ may be a unary function of the variance $V$, and it may be defined

that $\varphi(V)$ is a monotonically increasing function in $[0, +\infty]$ and needs to satisfy the following requirements: $\varphi(0) = 0$; for

$$\lim_{n \to +\infty} \varphi(V) = 1.$$

any V, $\varphi(V) \neq 1$; and Further, as long as a function expression satisfying the above requirements, the function expression may be used as the foregoing preset function expression. Specifically, the foregoing preset function expression may be: $\varphi(V) = 1-(1/2)^{(V/rv)}$, where rv is a configurable parameter. For example, rv may be configured as an integer power of 2. rv may be used to control the speed at which the function value of $\varphi(V)$ increases with the variance V. It may be recognized that $\varphi(V)$ rapidly approaches 1 as the variance V increases. The foregoing preset function expression may also be: $\varphi(V) = V/(V+rv)$, where rv is also a configurable parameter. It is to be noted that the foregoing preset function expression may also be other function expressions, which are not limited herein. Further, considering that the range of variance V is limited, the values of the corresponding pixel distribution complexity $\varphi(V)$ may be calculated in advance for all possible variance values, and a corresponding lookup table is generated. In this way, in calculating the pixel distribution complexity $\varphi(V)$, the above lookup table may be directly searched by using the variance V as an index.

After calculating the pixel distribution complexity $\varphi$ of the target region, the terminal may substitute the mean M and the deviation D of the target pixel values of all the pixels in the target region, the pixel distribution complexity $\varphi$, the denoising offset parameter Off, the enhancement parameter A, and the target pixel value of the target pixel into a free enhancement function expression corresponding to the enhanced pixel value, and calculate the enhanced pixel value of the target pixel. Specifically, for ease of interpretation, the upper left corner of the target video frame (which may be denoted as P) may be taken as the coordinate origin, the right direction taken as the positive direction of the x-axis, and the downward direction taken as the positive direction of the y-axis, then the coordinate p(y, x) may be used to represent the target pixel value of a target pixel in the target video frame. Accordingly, the above free enhancement function expression may be expressed as $\varphi*P(y, x)+(1-\varphi)*M+\gamma((1-\varphi)D)$, where $\gamma$ is a unary function determined by the denoising offset Off and the enhancement parameter A, which may be expressed as follows:

$$\gamma(x) = \begin{cases} A(x - \text{Off}) & , x > \text{Off} \\ 0 & , -\text{Off} \leq x \leq \text{Off} \\ A(x + \text{Off}) & , x < -\text{Off} \end{cases}$$

At the same time, the enhanced pixel value of the target pixel may be expressed as Out(y, x). Accordingly, it may be obtained that:

$$\text{Out(y,x)} = \varphi*P(y,x)+(1-\varphi)*M+\gamma((1-\varphi)D)$$

When the pixel distribution complexity around a target pixel is high, $\varphi$ is then close to 1, which, when substituted into the above formula, may lead to that the enhanced pixel value of the target pixel is close to the target pixel value. That is, when the pixel distribution around a target pixel is complicated, the effect of the enhancement is weak. When the pixel distribution complexity around a target pixel is very low, then $\varphi$ is close to 0, which, when substituted into the above formula, may lead to that the generated enhanced pixel value of the target pixel is equivalent to a smoothed value in the target region where the target pixel is located. That is, a smoothing operation is performed on the target pixel. If the target pixel is a noise in a region such as a face, a skin, a piece of cloth, or a sky cloud, the noise may be removed by the above smoothing operation. It should be noted that when the enhanced pixel value of the target pixel is calculated by using the above-described free enhancement function expression, the enhancement effect on the target pixel is not limited, and thus the above enhancement processing may be referred to as a "free enhancement mode".

Optionally, the enhanced pixel value of a target pixel may be generated by using a limited enhancement mode. Correspondingly, the specific process of Step 103 may be as follows: substitute the variance of the target pixel values of all the pixels in the target region into a preset function expression corresponding to the pixel distribution complexity, to calculate the pixel distribution complexity of the target region; and substitute the deviation of the target pixel values of all the pixels in the target region, the pixel distribution complexity, the absolute deviation parameter, the denoising offset parameter, the enhancement parameter, and the target pixel value of the target pixel into a limited enhancement function expression corresponding to the enhanced pixel value, to calculate and generate the enhanced pixel value of the target pixel.

In one implementation, after generating the statistical information of all the pixels in the target region, the terminal may substitute the variance in the statistical information into a preset function expression corresponding to the pixel distribution complexity $\varphi$, and calculate the pixel distribution complexity $\varphi$ of the target region. For the specific process, refer to the aforementioned process, details of which will not be repeated again here. After calculating the pixel

distribution complexity $\varphi$ of the target region, the terminal may substitute the deviation D of the target pixel values of all the pixels in the target region, the pixel distribution complexity $\varphi$, the absolute deviation parameter $D_{max}$, the denoising offset parameter Off, the enhancement parameter A, and the target pixel value of the target pixel into a limited enhancement function expression corresponding to the enhanced pixel value, and calculate and generate the enhanced pixel value of the target pixel. Specifically, for ease of interpretation, the upper left corner of a target video frame (which may be denoted as P) may be similarly taken as the coordinate origin, the right direction taken as the positive direction of the x-axis, and the downward direction taken as the positive direction of the y-axis, and the coordinate P(y, x) may be used to represent the target pixel value of a target pixel in the target video frame. Accordingly, the limited enhancement function expression may be expressed as: P(y, x)+$\Delta$(y, x), where $\Delta$(y, x) is the pixel enhancement value, and $\Delta$(y, x) = sign(D)(A-1)(1-$\varphi$)(2$D_{max}$-|D|-X1), where sign(x) is a sign function and its expressing formula may be as follows:

$$sign(x) = \begin{cases} 1 & ,x > 0 \\ 0 & ,x = 0 \\ -1 & ,x < 0 \end{cases}$$

X1 is the deviation boundary value, which may be calculated according to the pixel distribution complexity $\varphi$, the denoising offset Off, and the enhancement parameter A. The specific calculation formula may be as follows:

$$X1 = \frac{A*off}{(A-1)(1-\varphi)}$$

At the same time, the enhanced pixel value of the target pixel may be expressed as Out(y, x). Accordingly, it may be obtained that:

$$Out(y,x) = P(y,x) + sign(D)(A-1)(1-\varphi)(2D_{max}-|D|-X1)$$

Further, in order to ensure certain enhancement effect, the parameters in the limited enhancement function expression may be also set to meet corresponding conditions of use. For example, after actual testing, when the absolute value of the deviation satisfies X1<|D| <2$D_{max}$-X1, the enhancement effect is better. It may be seen that the positive and negative of the pixel enhancement value $\Delta$(y,x) is consistent with the positive and negative of the deviation D. Therefore, when compared to an un-enhanced target pixel, the contrast of the enhanced target pixel in the target region is higher, and thus the display effect may turn into clearer. In addition, as the absolute value of the deviation becomes larger, the absolute value of the pixel enhancement value $\Delta$(y, x) gradually becomes smaller, thus the enhancement effect becomes less obvious. That is, the enhancement effect becomes limited as the absolute value of the deviation becomes larger. Hence, the above enhancement process may be referred to as a "limited enhancement mode".

Optionally, a target video frame may be split into multiple video strips. Then the video image quality of the target video frame may be enhanced in parallel in units of video strips. Correspondingly, the specific process of Step 101 may be as follows: split the target video frame into a preset number of video strips based on the total number of rows of pixels or the total number of columns of pixels of the target video frame; and determine the target region of a target pixel in each video strip.

In one implementation, in order to improve the efficiency of processing the video image quality enhancement of a target video frame, the terminal may split the target video frame into a preset number of non-overlapping video strips based on the total number of rows or the total number of columns of pixels of the target video frame. Each video strip consists of consecutive rows of pixels or columns of pixels of the target video frame, so that each video strip may be used as a sub-image of the target video frame, and the combination of all video strips forms the target video frame. At the same time, the starting pixel row/column and the ending pixel row/column of each video strip may be recorded. For example, the target video frame may be split into N video strips having substantially the same number of pixel rows. The starting pixel row number of the i-th video strip may be $SL_{start}(i)$, and the ending pixel row number may be $SL_{end}(i)$. When the target video frame has a resolution of 1280*720, the total number of rows of pixels of the target video frame is 720, and the total number of columns of pixels is 1280. Assuming N=10, if an even splitting is performed, the number of rows of pixels included in each video strip is 72, where the starting pixel row number of the first video strip is $SL_{start}(1)$ = 1, and the ending pixel row number of the first video strip $SL_{end}(1)$ = 72. Afterwards, the terminal may determine the target region of a target pixel in each video strip independently and in parallel, and generate statistical information of all the pixels in the target region in each video strip. The terminal may then follow the aforementioned process of video image quality enhancement, to enhance the video image quality of a target pixel in each video strip. In this way, not only the power consumption may be reduced, but the video strips of the target video frame may be also processed independently and in parallel, thereby effectively reducing the delay of video play caused by the processing of video image quality enhancement, thus improving the user experience.

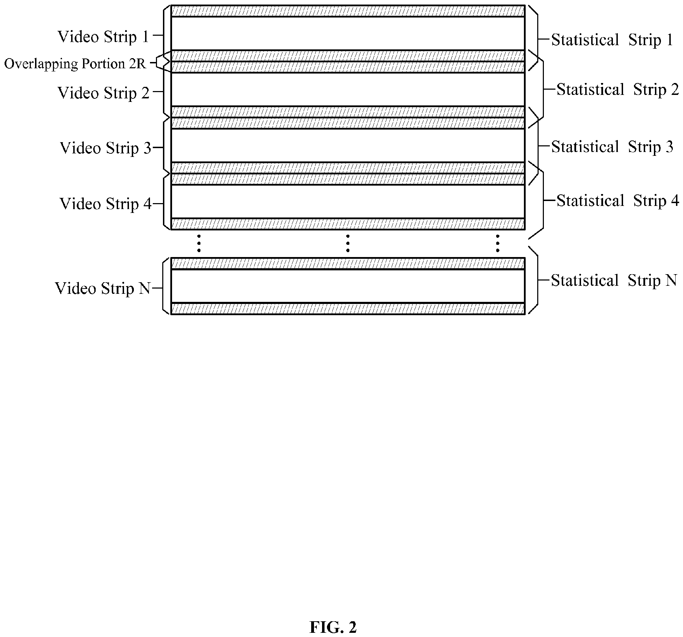

Specifically, since the pixels in the boundary portions of two adjacent video strips are special, if continuing to follow the aforementioned process of determining the target region when a target pixel is located at an edge position of a target video frame, it may easily lead to the incomplete statistical information due to the smaller number of pixels in a target region, which may subsequently lead to occurrence of poor enhancement effect for the pixels in the boundary portions. For this reason, a target video frame may be split into multiple statistical strips, where the number of statistical strips and the number of video strips are the same, and each statistical strip uniquely corresponds to one video strip. A statistical strip may be obtained by increasing the pixel row or pixel column of each video strip. As shown in FIG. 2, continuing to take the target region as a rectangular region as an example, a target video frame may be split into N video strips having substantially the same number of pixel rows, where the starting pixel row number of the i-th video strip may be $SL_{start}(i)$, the ending pixel row number may be $SL_{end}(i)$. When the preset radius is R, the starting pixel row number of a statistical strip corresponding to the i-th video strip may be $SL_{start}(i)$-R, and the ending pixel row number may be $SL_{end}(i)$+R. It may be found that there will be a 2R overlap region between two adjacent statistical strips. At this point, when determining the target region of a target pixel in a certain video strip, the target region of the target pixel may be determined in a statistical strip corresponding to the video strip.

Optionally, if the enhanced pixel value of a target pixel exceeds a value range corresponding to the data type of the target pixel, the enhanced pixel value may be normalized to the above value range. Correspondingly, the specific process may be as follows: if the enhanced pixel value of a target pixel is greater than the maximum pixel value in the value range corresponding to the data type of the target pixel, update the enhanced pixel value to an updated pixel value obtained by subtracting a preset value from the maximum pixel value; or, if the enhanced pixel value of the target pixel is smaller than the minimum pixel value in the value range corresponding to the data type of the target pixel, update the enhanced pixel value to an updated pixel value obtained by adding a preset value to the minimum pixel value.

In one implementation, after the enhancement process is performed on a target pixel, the terminal may determine whether the generated enhanced pixel value of the target pixel exceeds a value range corresponding to the data type of the target pixel. If the enhanced pixel value exceeds the value range, it means that the enhanced pixel value cannot be used. At this point, the enhanced pixel value may be normalized to the value range corresponding to the data type of the target pixel. Specifically, if the enhanced pixel value of the target pixel is greater than the maximum pixel value in the value range corresponding to the data type of the target pixel, it indicates that a relatively larger pixel value in the value range may be used as the updated pixel value of the enhanced pixel value. Accordingly, the enhanced pixel value may be updated to an updated pixel value obtained by subtracting a preset value from the pixel maximum value. If the enhanced pixel value of the target pixel is smaller than the pixel minimum value in the value range corresponding to the data type of the target pixel, it indicates that a relatively smaller pixel value in the value range may be used as the updated pixel value of the enhanced pixel value. Accordingly, the enhanced pixel value may be updated to an updated pixel value obtained by adding a preset value to the minimum pixel value. Taking the data type as an 8-bit unsigned integer and the corresponding value range as an interval [0, 255] as an example, if the preset value is 10, when the generated enhanced pixel value is 280, 245 may be used as the updated value of the enhanced pixel value, and if the generated enhanced pixel value is -25, 10 may be used as the updated value of the enhanced pixel value.

Optionally, the color space of a target video frame may be converted. Correspondingly, the specific process may be as follows: if the initial color space of a target video frame does not include a luma component, convert the target pixel value of the target pixel in the initial space to a target pixel value in a preset color space containing the luma component.

In one implementation, a color image may have multiple types of color space representations, such as an RGB color space representation including three color components of red, green, and blue, a YUV color space representation including a luma component and two color difference components. A color image may be converted between different types of color space representations. When a target video frame is a color image, the terminal may convert the current color space (which may be referred to as the "initial color space") of the target video frame. Following the aforementioned enhancement process, the terminal may then perform the video image quality enhancement based on the converted color space to obtain the enhanced video frame. After the enhancement, the terminal may convert the enhanced video frame back to the original color space. For instance, before the terminal performs the video image quality enhancement on a target video frame, if the initial color space of the target video frame does not include a luma component, such as an RGB color space, the terminal may convert the target pixel value of the target pixel in the initial space into a target pixel value in a preset color space containing a luma component, such as a YUV color space. The terminal may then perform the aforementioned enhancement process for the target pixel value on the converted target pixel according to the aforementioned enhancement process to obtain the enhanced pixel value. Afterwards, the terminal may convert the enhanced pixel value of the target pixel back to a pixel value in the initial color space, to maintain the consistency of the color space before and after the target video frame processing. Since different color space representations have their own advantages and disadvantages, the effect of video image quality enhancement of a target video frame may be further improved through the above conversion process.

It should be noted that a terminal may generate an enhanced target video frame by using different image generation modes. Specifically, the image generation modes may include a full image generation mode and a real-time generation mode. The full image generation mode means that the terminal generates a complete enhanced target video frame after all the pixels in the target video frame are processed through the enhancement process. The real-time generation mode means that the terminal may split the target video frame into multiple sub-images. When all pixels in each sub-image are processed through the enhancement process, the terminal may generate an enhanced sub-image. After all the enhanced sub-images are generated, the terminal may generate an enhanced target video frame based on all the enhanced sub-images. This results in improved efficiency of processing the video image quality enhancement of a video frame by the terminal.

In the disclosed embodiments, a target region of a target pixel in a target video frame is determined; based on the target pixel values of all the pixels in the target region, statistical information of all the pixels in the target region is generated; based on the statistical information and preset configuration parameters in combination with the target pixel value of the target pixel, an enhanced pixel value of the target pixel is calculated and generated. In this way, based on the target pixel values of all the pixels in a region where a pixel is located in a video frame, a terminal may respectively generate an enhanced pixel value of each pixel, so that the video image quality may be enhanced based on the actual defects of the video frame. The effect of the video image quality enhancement is further improved.

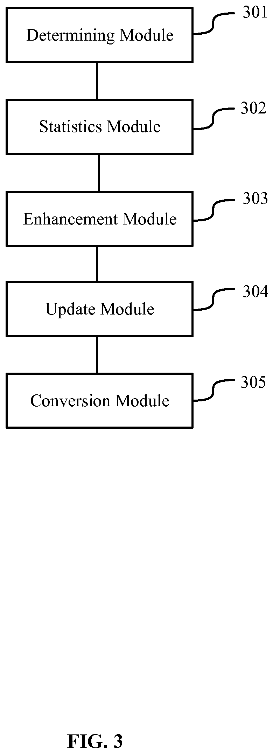

Based on the similar concepts, the embodiments of the present disclosure further provide a device for enhancing video image quality. As shown in FIG. 3, the device includes:

a determining module 301 that is configured to determine a target region of a target pixel in a target video frame;
a statistics module 302 that is configured to generate statistical information of all pixels in the target region based on target pixel values of all the pixels in the target region; and
an enhancement module 303 that is configured to calculate and generate an enhanced pixel value of the target pixel based on the statistical information and preset configuration parameters in combination with a target pixel value of the target pixel.

Optionally, the determining module 301 is further configured to:
determine, based on a preset radius, a rectangular region, in which the target pixel is the center of the rectangular region, the length is twice the preset radius plus one, and the width is twice the preset radius plus one, as the target region.

Optionally, the statistical information includes at least a mean, a deviation, and a variance, and the preset configuration parameters include at least a denoising offset parameter and an enhancement parameter; and the enhancement module 303 is further configured to:

substitute the variance of the target pixel values of all the pixels in the target region into a preset function expression corresponding to a pixel distribution complexity to calculate a pixel distribution complexity of the target region; and substitute the mean and the deviation of the target pixel values of all the pixels in the target region, the pixel distribution complexity, the denoising offset parameter, the enhancement parameter, and the target pixel value of the target pixel into a free enhancement function expression corresponding to the enhanced pixel value, to calculate and generate the enhanced pixel value of the target pixel.

Optionally, the statistical information includes at least a deviation and a variance, and the preset configuration parameters include at least an absolute deviation parameter, an enhancement degree parameter, and a denoising offset parameter; and the enhancement module 303 is further configured to:

substitute the variance of the target pixel values of all the pixels in the target region into a preset function expression corresponding to a pixel distribution complexity to calculate a pixel distribution complexity of the target region; and substitute the deviation of the target pixel values of all the pixels in the target region, the pixel distribution complexity, the absolute deviation parameter, the denoising offset parameter, the enhancement parameter, and the target pixel value of the target pixel into a limited enhancement function expression corresponding to the enhanced pixel value, to calculate and generate the enhanced pixel value of the target pixel.

Optionally, the determining module 301 is further configured to:

split the target video frame into a preset number of video strips based on a total number of rows of pixels or a total number of columns of pixels of the target video frame; and

determine a target region of a target pixel in each video strip.

Optionally, the device further includes an update module 304 that is configured to:

if the enhanced pixel value of the target pixel is greater than a maximum pixel value in a value range corresponding to a data type of the target pixel, update the enhanced pixel value to an updated pixel value obtained by subtracting a preset value from the pixel maximum value; or
if the enhanced pixel value of the target pixel is smaller than a minimum pixel value in the value range corresponding to the data type of the target pixel, update the enhanced pixel value to an updated pixel value obtained by adding the preset value to the minimum pixel value.

Optionally, the device further includes a conversion module 305 that is configured to:

if an initial color space of the target video frame does not include a luma component, convert the target pixel value of the target pixel in the initial color space into a target pixel value in a preset color space containing the luma component, and
convert the enhanced pixel value of the target pixel back to a pixel value in the initial color space.

It should be noted that, in enhancing video image quality, a device for enhancing video image quality provided by the above embodiments is illustrated merely by way of example of the foregoing division of the functional modules. In real applications, the foregoing functions may be allocated into and implemented by different functional modules according to the requirements. That is, the internal structure of the device may be divided into different functional modules to complete all or part of the above-described functions. In addition, the devices for enhancing video image quality and the methods for enhancing video image quality provided by the foregoing embodiments are attributed to the same concept. Accordingly, for the specific implementation process of the devices provided by the embodiments, the embodiments for the methods may be referred to, details of which will not be described again here.

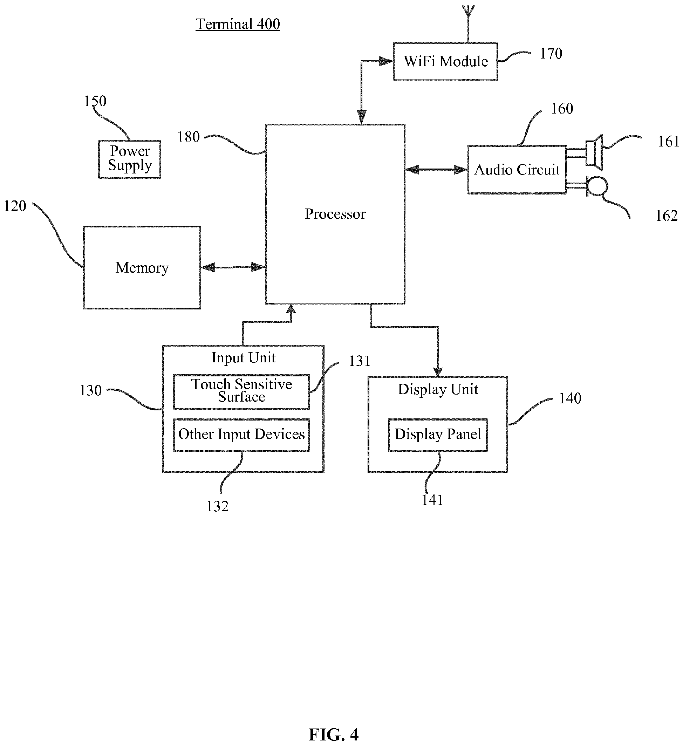

FIG. 4 illustrates a schematic structural diagram of a terminal. The terminal may be configured to implement the methods for enhancing video image quality described in the above embodiments.

The terminal 400 may include a memory 120 having one or more computer-readable storage media, an input unit 130, a display unit 140, an audio circuit 160, a WiFi (Wireless Fidelity) module 170, a processor 180 with one or more processing cores, a power supply 150, etc. A person skilled in the art will appreciate that the terminal structure illustrated in FIG. 4 should not be constructed as a limitation to a terminal. A terminal may include more or fewer components than those illustrated, or include a combination of some illustrated components, or may have different component configurations. The memory 120 may be used to store software programs and modules. The processor 180 executes various functional applications and data processing by running software programs and modules stored in the memory 120. The input unit 130 may be configured to receive input numeric or character information, and generate keyboard, mouse, joystick, optical or trackball signal inputs related to user settings and function controls. In particular, the input unit 130 may include a touch-sensitive surface 131 as well as other input devices 132. The display unit 140 may be used to display information entered by a user or information provided to a user and various graphical user interfaces of the terminal 400, where the graphical user interfaces may comprise graphics, text, icons, video, and any combination thereof. The display unit 140 may include a display panel 141. The audio circuit 160, the speaker 161, and the microphone 162 may provide an audio interface between a user and the terminal 400. WiFi is a short-range wireless transmission technology. Through the WiFi module 170, the terminal 400 may allow a user to send and receive emails, browse web pages, access streaming media, etc. The WiFi module 170 provides wireless broadband Internet access for users. The terminal 400 also includes a power supply 150 (e.g., a battery) that powers the various components.

The processor 180 is the control center of the terminal 400, connecting various components of the entire terminal through various interfaces and lines. Through running or executing software programs and/or modules stored in the memory 120, and calling data stored in the memory 120, the various functions and data processing of the terminal 400 are implemented, to allow overall monitoring of the terminal. The terminal 400 also includes a memory and one or more programs. The one or more programs are stored in the memory and configured to be executed by one or more processors to implement the one or more programs, which include instructions configured to perform the methods for enhancing video image quality described above.

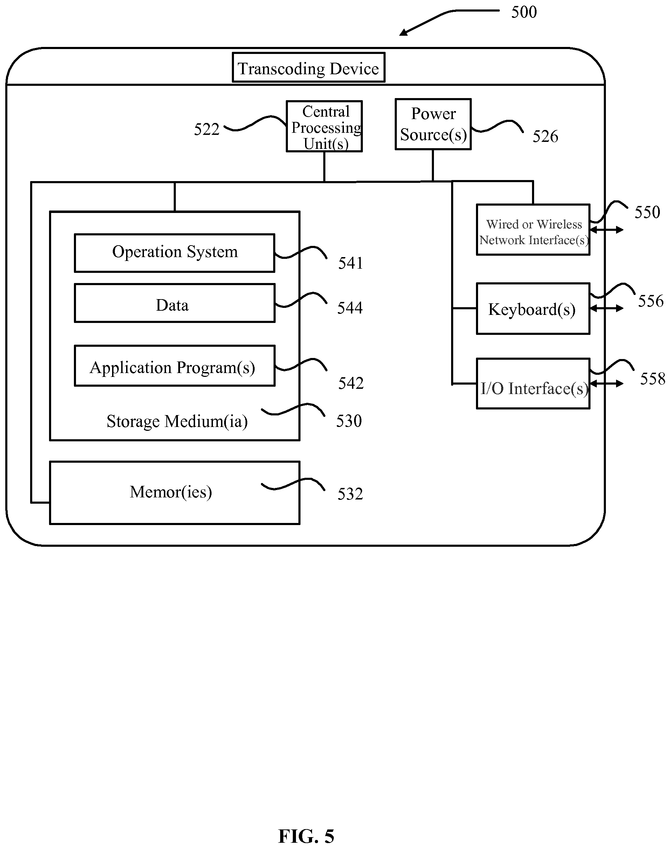

FIG. 5 is a schematic structural diagram of a transcoding device according to some embodiments of the present disclosure. The transcoding device 500 may vary considerably depending on the configuration or performance, and may include one or more central processing units 522 (e.g., one or more processors) and memories 532, one or more storage media 530 (e.g., one or one mass storage devices) for storing application programs 542 or data 544. Here, the memories 532 and the storage media 530 may be a volatile storage device or a non-volatile storage device. The programs stored on the storage media 530 may include one or more modules (not shown), each of which may include a series of operating instructions for the transcoding device. Further, the central processing units 522 may be configured to communicate with the storage media 530, and execute, on the transcoding device 500, a series of operating instructions stored in the storage media 530.

The transcoding device 500 may further include one or more power sources 526, one or more wired or wireless network interfaces 550, one or more input and output interfaces 558, one or more keyboards 556, and/or one or more operating systems 541, such as Windows Server™, Mac OS X™, Unix™, Linux™, FreeBSD™, and the like.

The transcoding device 500 may include a memory and one or more programs. The one or more programs are stored in the memory and configured to be executed by one or more processors to implement the one or more programs, which include instructions configured to perform the methods for enhancing video image quality described above.

A person skilled in the art may understand that all or part of the steps of the above embodiments may take the form of hardware implementation, or take the form of implementation of programs for directing the relevant hardware. The programs may be stored in a computer-readable storage medium. The storage medium may be a read-only memory, a magnetic disk, or an optical disk, etc.

Although the present disclosure has been described with reference to preferred embodiments, these embodiments should not be constructed as limiting the present disclosure. Any modifications, equivalent replacements, and improvements made without departing from the spirit and principle of the present disclosure shall fall within the scope of the protection of the present disclosure.

**Claims**

1. A method for enhancing video image quality, comprising:

   determining a target region of a target pixel in a target video frame;
   generating statistical information of all pixels in the target region based on target pixel values of all the pixels in the target region; and
   calculating and generating an enhanced pixel value of the target pixel based on the statistical information and preset configuration parameters in combination with a target pixel value of the target pixel.

2. The method according to claim 1, wherein determining the target region of the target pixel in the target video frame further includes:
   determining, based on a preset radius, a rectangular region, in which the target pixel is the center of the rectangular region, the length is twice the preset radius plus one, and the width is twice the preset radius plus one, as the target region.

3. The method according to claim 1, wherein the statistical information includes at least a mean, a deviation, and a variance, and the preset configuration parameters include at least a denoising offset parameter and an enhancement parameter; and
   calculating and generating the enhanced pixel value of the target pixel according to the statistical information and the preset configuration parameters in combination with the target pixel value of the target pixel further includes:

   substituting the variance of the target pixel values of all the pixels in the target region into a preset function expression corresponding to a pixel distribution complexity to calculate a pixel distribution complexity of the target region, and
   substituting the mean and the deviation of the target pixel values of all the pixels in the target region, the pixel distribution complexity, the denoising offset parameter, the enhancement parameter, and the target pixel value of the target pixel into a free enhancement function expression corresponding to the enhanced pixel value, to calculate and generate the enhanced pixel value of the target pixel.

4. The method according to claim 1, wherein the statistical information includes at least a deviation and a variance, and the preset configuration parameters include at least an absolute deviation parameter, an enhancement parameter, and a denoising offset parameter; and
   calculating and generating the enhanced pixel value of the target pixel according to the statistical information and the preset configuration parameters in combination with the target pixel value of the target pixel further includes:

   substituting the variance of the target pixel values of all the pixels in the target region into a preset function expression corresponding to a pixel distribution complexity to calculate a pixel distribution complexity of the target region, and

substituting the deviation of the target pixel values of all the pixels in the target region, the pixel distribution complexity of the target region, the absolute deviation parameter, the denoising offset parameter, the enhancement parameter, and the target pixel value of the target pixel into a limited enhancement function expression corresponding to the enhanced pixel value, to calculate and generate the enhanced pixel value of the target pixel.

5. The method according to claim 1, wherein determining the target region of the target pixel in the target video frame further includes:

splitting the target video frame into a preset number of video strips based on a total number of rows of pixels or a total number of columns of pixels of the target video frame; and
determining a target region of a target pixel in each video strip.

6. The method according to claim 1, further comprising:

if the enhanced pixel value of the target pixel is greater than a maximum pixel value in a value range corresponding to a data type of the target pixel, updating the enhanced pixel value to an updated pixel value obtained by subtracting a preset value from the pixel maximum value; or
if the enhanced pixel value of the target pixel is smaller than a minimum pixel value in the value range corresponding to the data type of the target pixel, updating the enhanced pixel value to an updated pixel value obtained by adding the preset value to the minimum pixel value.

7. The method according to claim 1, wherein, before determining the target region of the target pixel in the target video frame, the method further includes:

if an initial color space of the target video frame does not include a luma component, converting the target pixel value of the target pixel in the initial color space into a target pixel value in a preset color space containing the luma component; and
after calculating and generating the enhanced pixel value of the target pixel, the method further includes:
converting the enhanced pixel value of the target pixel back to a pixel value in the initial color space.

8. A device for enhancing video image quality, comprising:

a determining module that is configured to determine a target region of a target pixel in a target video frame;
a statistics module that is configured to generate statistical information of all pixels in the target region based on target pixel values of all the pixels in the target region; and
an enhancement module that is configured to calculate and generate an enhanced pixel value of the target pixel based on the statistical information and preset configuration parameters in combination with a target pixel value of the target pixel.

9. The device according to claim 8, wherein the determining module is further configured to:
determine, based on a preset radius, a rectangular region, in which the target pixel is the center of the rectangular region, the length is twice the preset radius plus one, and the width is twice the preset radius plus one, as the target region.

10. The device according to claim 8, wherein the statistical information includes at least a mean, a deviation, and a variance, and the preset configuration parameters include at least a denoising offset parameter and an enhancement parameter; and
the enhancement module is further configured to:

substitute the variance of the target pixel values of all the pixels in the target region into a preset function expression corresponding to a pixel distribution complexity to calculate a pixel distribution complexity of the target region, and
substitute the mean and the deviation of the target pixel values of all the pixels in the target region, the pixel distribution complexity, the denoising offset parameter, the enhancement parameter, and the target pixel value of the target pixel into a free enhancement function expression corresponding to the enhanced pixel value, to calculate and generate the enhanced pixel value of the target pixel.

**11.** The device according to claim 8, wherein the statistical information includes at least a deviation and a variance, and the preset configuration parameters include at least an absolute deviation parameter, an enhancement degree parameter, and a denoising offset parameter; and
the enhancement module is further configured to:

substitute the variance of the target pixel values of all the pixels in the target region into a preset function expression corresponding to a pixel distribution complexity to calculate a pixel distribution complexity of the target region, and
substitute the deviation of the target pixel values of all the pixels in the target region, the pixel distribution complexity of the target region, the absolute deviation parameter, the denoising offset parameter, the enhancement parameter, and the target pixel value of the target pixel into a limited enhancement function expression corresponding to the enhanced pixel value, to calculate and generate the enhanced pixel value of the target pixel.

**12.** The device according to claim 8, wherein the determining module is further configured to:

split the target video frame into a preset number of video strips based on a total number of rows of pixels or a total number of columns of pixels of the target video frame; and
determine a target region of a target pixel in each video strip.

**13.** The device according to claim 8, further comprising:
an update module that is configured to:

if the enhanced pixel value of the target pixel is greater than a maximum pixel value in a value range corresponding to a data type of the target pixel, update the enhanced pixel value to an updated pixel value obtained by subtracting a preset value from the pixel maximum value; or
if the enhanced pixel value of the target pixel is smaller than a minimum pixel value in the value range corresponding to the data type of the target pixel, update the enhanced pixel value to an updated pixel value obtained by adding the preset value to the minimum pixel value.

**14.** The device according to claim 8, further comprising:
a conversion module that is configured to:

if an initial color space of the target video frame does not include a luma component, convert the target pixel value of the target pixel in the initial color space into a target pixel value in a preset color space containing the luma component, and
convert the enhanced pixel value of the target pixel back to a pixel value in the initial color space.

**15.** A device, comprising: a processor and a memory, wherein the memory stores at least one instruction, at least one program, a code set, or a set of instructions that, when loaded and executed by the processor, implements a method for enhancing video image quality according to any one of claims 1 to 7.

**16.** A transcoding device, comprising: a processor and a memory, wherein the memory stores at least one instruction, at least one program, a code set, or a set of instructions that, when loaded and executed by the processor, implements the method for enhancing video image quality according to any one of claims 1 to 7.

Determine target region of target pixel in target video frame — 101

Generate statistical information of all pixels in target region based on target pixel values of all pixels in target region — 102

Calculate and generate enhanced pixel value of target pixel according to statistical information and preset configuration parameters in combination with target pixel value of target pixel — 103

**FIG. 1**

Video Strip 1 — | Statistical Strip 1

Overlapping Portion 2R — | Statistical Strip 2

Video Strip 2 —

Video Strip 3 — | Statistical Strip 3

Video Strip 4 — | Statistical Strip 4

Video Strip N — | Statistical Strip N

**FIG. 2**

Determining Module — 301

Statistics Module — 302

Enhancement Module — 303

Update Module — 304

Conversion Module — 305

**FIG. 3**

Terminal 400

WiFi Module — 170

150

Power Supply

180

160

Audio Circuit — 161

120

Processor

162

Memory

Input Unit

131

130

Touch Sensitive Surface

Display Unit — 140

Other Input Devices

Display Panel

132

141

**FIG. 4**

500

Transcoding Device

522 Central Processing Unit(s)

Power Source(s) 526

Wired or Wireless Network Interface(s) 550

Operation System 541

Data 544

Keyboard(s) 556

Application Program(s) 542

I/O Interface(s) 558

Storage Medium(ia) 530

Memor(ies) 532

**FIG. 5**

## INTERNATIONAL SEARCH REPORT

| International application No. |
|---|
| **PCT/CN2018/106642** |

| A. | CLASSIFICATION OF SUBJECT MATTER |
|---|---|

G06T 5/00(2006.01)i

According to International Patent Classification (IPC) or to both national classification and IPC

| B. | FIELDS SEARCHED |
|---|---|

Minimum documentation searched (classification system followed by classification symbols)

G06T5

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; GOOGLE; IEEE: 图像, 局部, 增强, 质量, 区域, 中心, 滑动, 窗口, 矩形, 方差, 平均值, 均值, 偏差, 分布, 复杂度, 去噪, 噪声, 参数, 目标, 像素, 更新, 亮度, 灰度, image, quality, partially, part, enhance, strengthen, coefficient, pixel, variance, complexity, distribute, average, window, area, bolck, glide, rectangle, noise, parameter, target, central, brightness, gray, grey, luminance

| C. | DOCUMENTS CONSIDERED TO BE RELEVANT |
|---|---|

| Category* | Citation of document, with indication, where appropriate, of the relevant passages | Relevant to claim No. |
|---|---|---|
| X | 韩涛 (HAN, Tao). "水下图像预处理技术研究 (Study on the Underwater Image Pre-processing)" 中国优秀硕士学位论文全文数据库(电子期刊) (Chinese Master's Theses Full-Text Database (Electronic Journal)), 15 April 2011 (2011-04-15), ISSN: 1674-0246, section 3.3 | 1, 2, 5-9, 12-16 |
| Y | 韩涛 (HAN, Tao). "水下图像预处理技术研究(Study on the Underwater Image Pre-processing)" 中国优秀硕士学位论文全文数据库(电子期刊) (Chinese Master's Theses Full-Text Database (Electronic Journal)), 15 April 2011 (2011-04-15), ISSN: 1674-0246, section 3.3 | 3, 4, 10, 11 |
| Y | 刘松涛 (LIU, Songtao). "基于广义直方图均衡的图像增强新方法 (A Novel Method for Image Enhancement Based on Generalized Histogram)" 电光与控制 (Electronics Optics & Control), Vol. 17, No. 3, 01 March 2010 (2010-03-01), ISSN: 1671-637X, pp. 13 and 14 | 3, 4, 10, 11 |

☑ Further documents are listed in the continuation of Box C.      ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **22 April 2019** | **07 May 2019** |

| Name and mailing address of the ISA/CN | Authorized officer |
|---|---|
| **National Intellectual Property Administration, PRC (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

## INTERNATIONAL SEARCH REPORT

| International application No. |
| --- |
| **PCT/CN2018/106642** |

**C. DOCUMENTS CONSIDERED TO BE RELEVANT**

| Category* | Citation of document, with indication, where appropriate, of the relevant passages | Relevant to claim No. |
| --- | --- | --- |
| A | CN 107633491 A (CHANGCHUN INSTITUTE OF OPTICS, FINE MECHANICS AND PHYSICS, CHINESE ACADEMY OF SCIENCES) 26 January 2018 (2018-01-26) entire document | 1-16 |
| A | CN 101770639 A (BEIHANG UNIVERSITY) 07 July 2010 (2010-07-07) entire document | 1-16 |
| A | JP 2006277688 A (DENSO IT LAB INC) 12 October 2006 (2006-10-12) entire document | 1-16 |

Form PCT/ISA/210 (second sheet) (January 2015)

**INTERNATIONAL SEARCH REPORT**
**Information on patent family members**

International application No.

**PCT/CN2018/106642**

| Patent document cited in search report | | | Publication date (day/month/year) | Patent family member(s) | | | Publication date (day/month/year) |
|---|---|---|---|---|---|---|---|
| CN | 107633491 | A | 26 January 2018 | None | | | |
| CN | 101770639 | A | 07 July 2010 | CN | 101770639 | B | 23 May 2012 |
| JP | 2006277688 | A | 12 October 2006 | None | | | |

Form PCT/ISA/210 (patent family annex) (January 2015)

22